# FASCICULE DE BREVET EUROPEEN

(11) **EP 3 357 220 B1**
(45) Date de publication et mention de la délivrance du brevet: **08.07.2020**
(21) Numéro de dépôt: 16785218.5
(22) Date de dépôt: 23.09.2016
(51) Int. Cl.: H04L 29/12, H04L 29/06

(54) **TECHNIQUE DE GESTION D'UNE ADRESSE DANS UN RESEAU LOCAL**
VERWALTUNG EINER ADRESSE IN EINEM LOKALEN NETZWERK
MANAGEMENT OF A LOCAL NETWORK ADDRESS

(30) Priorité: 29.09.2015 FR 1559175
(43) Date de publication de la demande: 08.08.2018
(73) Titulaire: ORANGE, 75015 Paris (FR)
(72) Inventeur: FONTAINE, Fabrice, 35850 Geveze (FR); NEYRET, Nicolas, 22300 Lannion (FR)
(86) Numéro de dépôt international: PCT/FR2016/052420
(87) Numéro de publication internationale: WO 2017/055718

(56) Documents cités:
- US-A1- 2011 113 130

## Description

L'invention se rapporte au domaine général des télécommunications.

L'invention concerne plus particulièrement une technique de gestion d'une adresse dans un réseau local par un dispositif d'accès.

Le dispositif d'accès permet notamment à des dispositifs localisés dans un site client ou réseau local d'accéder à un réseau de communication étendu WAN (pour « Wide Area Network »), tel que le réseau Internet. Pour un réseau local, le dispositif d'accès est connu sous le terme de passerelle d'accès. Document US2011/0113130 divulgue un partage d'une adresse IP selon un créneau temporel.

Un contrôle parental peut être mis en œuvre sur une passerelle d'accès pour limiter un accès de certains dispositifs du réseau local au réseau Internet et au réseau local. Ce contrôle parental permet à un utilisateur principal de définir pour un dispositif du réseau local, des plages horaires autorisées ou interdites. A titre d'exemple, un enfant a un accès autorisé de 17:00 à 18:30 tous les jours, son accès étant bloqué en dehors de cette plage horaire.

La passerelle d'accès doit alors inspecter l'ensemble des paquets qu'elle reçoit en provenance de dispositifs du réseau local, afin de détecter si cet accès est autorisé ou non. Ceci entraîne une charge de traitement importante au niveau de la passerelle d'accès, notamment au niveau de son processeur.

Un des buts de l'invention est de remédier à des insuffisances/inconvénients de l'état de la technique et/ou d'y apporter des améliorations.

L'invention a pour objet un procédé de gestion d'une adresse dans un réseau local par un dispositif d'accès permettant un accès à un réseau de communication étendu, une adresse permettant à un dispositif du réseau local de communiquer par l'intermédiaire du dispositif d'accès avec d'autres dispositifs. Selon un premier aspect, ce procédé comprend :
- une obtention par le dispositif d'accès d'une règle de contrôle d'accès à appliquer, ladite règle visant à bloquer une communication de paquets de données à partir d'au moins une heure de début et jusqu'à une heure de fin ;
- un envoi par le dispositif d'accès à au moins un dispositif du réseau local d'un message DHCP relatif à une adresse dans le réseau local associée audit dispositif, ledit message portant une information indiquant au dispositif que ladite adresse n'est plus valide à partir de ladite heure de début, le message envoyé allouant une adresse au dispositif pour une durée d'allocation, déterminée en fonction d'une durée d'accès autorisé jusqu'à l'heure de début ;
ledit dispositif d'accès mettant en œuvre au moins une action conduisant à une absence d'adresse valide pour ledit dispositif du réseau local, tant que l'heure de fin de la règle de contrôle d'accès n'est pas dépassée, l'action consistant à envoyer un refus d'allocation d'adresse DHCP ou une réponse DHCP avec une durée d'allocation nulle en réponse à une demande du dispositif du réseau local reçue après l'heure de début.

Selon un deuxième aspect, le procédé comprend :
- une obtention par le dispositif d'accès d'une règle de contrôle d'accès à appliquer, ladite règle visant à bloquer une communication de paquets de données à partir d'au moins une heure de début et jusqu'à une heure de fin ;
- un envoi (G1) par le dispositif d'accès à au moins un dispositif du réseau local d'un message (N2) relatif à une adresse dans le réseau local associée audit dispositif à partir de l'heure de début, ledit message portant une information indiquant au dispositif que ladite adresse n'est plus valide à partir de ladite heure de début, ledit message étant un message de diffusion d'un préfixe ICMPv6 Router Advertisement indiquant une durée de vie nulle, ledit préfixe étant destiné à permettre au dispositif du réseau local de construire ladite adresse,
ledit dispositif d'accès mettant en œuvre au moins une action conduisant à une absence d'adresse valide pour ledit dispositif du réseau local, tant que l'heure de fin de la règle de contrôle d'accès n'est pas dépassée, l'action consistant à envoyer de nouveau ledit message.

Le procédé de gestion tire son origine d'un problème identifié lors de la mise en œuvre du contrôle parental. Il est ici souligné qu'il peut également être mis en œuvre dès qu'un dispositif d'accès doit appliquer une règle de contrôle à des paquets émis ou à destination de dispositifs d'un réseau local. Le réseau local correspond aussi bien à un réseau domestique, dans lequel une règle de contrôle parental doit être appliquée, qu'à un réseau d'entreprise, dans lequel une règle de contrôle d'accès doit être appliquée.

Grâce à un message transmis par le dispositif d'accès vers un dispositif du réseau local, une adresse dans le réseau allouée au dispositif du réseau local devient invalide au moins à l'heure de début de la règle de contrôle qui doit être appliquée. Ceci a pour effet d'empêcher le dispositif de communiquer avec d'autres dispositifs situés aussi bien dans le réseau local que dans le réseau de communication étendu. Le contrôle du trafic par le dispositif d'accès est alors opérationnel. Cette technique permet ainsi d'éviter d'inspecter tous les paquets afin d'appliquer la règle de contrôle. La charge de traitement au niveau du dispositif d'accès pour mettre en œuvre la règle de contrôle n'est pas augmentée. Par ailleurs, aucune modification n'est requise au niveau du protocole de gestion d'adresse. La technique de gestion d'adresse trouve ainsi une application avantageuse à la mise en œuvre du contrôle parental dans un réseau domestique.

Il est ici souligné qu'une solution pour diminuer la charge de traitement pourrait consister à inspecter uniquement les paquets correspondant à un établissement d'une nouvelle connexion. Dans ce cas, seuls les premiers paquets d'une connexion sont inspectés et les paquets suivants reçus du réseau Internet sont directement transmis sur le réseau local vers leur destinataire. Ainsi, pour l'exemple du contrôle parental décrit précédemment, si un enfant tente d'établir une connexion à 16:30, cette demande est bloquée. Toutefois, si l'enfant tente d'établir une connexion à 17:30, cette demande est autorisée. Cette solution présente l'inconvénient de ne pas couper les connexions déjà établies à l'heure de début de la plage horaire contrôlée. Ainsi une connexion établie avant l'heure de début de la règle de contrôle parental, c'est-à-dire 18:30, le reste tant qu'elle n'est pas terminée du fait d'un serveur distant ou de l'enfant.

Grâce à la technique de gestion d'adresse dans le réseau local, il est possible de couper cette connexion qui a été établie avant l'heure de début de contrôle d'accès. La charge de traitement au niveau du dispositif d'accès est également diminuée par rapport à cette solution, car il n'est pas nécessaire d'inspecter les paquets correspondant à un établissement d'une nouvelle connexion. Le dispositif d'accès fait en sorte ensuite que le dispositif du réseau local ne dispose pas d'une adresse valide tant que la règle de contrôle d'accès doit être appliquée.

L'adresse dans le réseau qui est allouée peut aussi bien être une adresse de type IPv4, qu'une adresse de type IPv6.

L'adresse est alors allouée avec une durée d'allocation qui dépend de l'heure de début de la règle de contrôle d'accès. La durée d'allocation peut être envoyée de manière explicite ou de manière implicite et déduite de la durée de bail. Cette détermination permet de garantir que l'adresse dans le réseau ne sera plus valide à l'heure de début. Une fois la durée d'allocation écoulée, le dispositif du réseau local doit alors demander un renouvellement de son adresse. En effet, il n'a plus d'adresse dans le réseau valide et ne peut accéder au réseau local ni au réseau de communication étendu.

Selon le premier aspect, le message envoyé est un message du protocole DHCP, pour « Dynamic Host Configuration Protocol ». Dans une première variante où le protocole est DHCPv4, le message envoyé en réponse à une requête DHCP Request est un message DHCP ACK, comprenant un bail. Dans une deuxième variante où le protocole est DHCPv6 avec état (« stateful » en anglais), le message envoyé en réponse à une demande DHCP Request est un message DHCPv6 Reply, comprenant une durée de vie.

Selon une caractéristique particulière, un refus d'allocation d'adresse est envoyé par le dispositif d'accès en réponse à une demande du dispositif du réseau local reçue après l'heure de début. Un tel refus d'allocation d'adresse est un exemple d'action conduisant à une absence d'adresse valide.

Ceci permet d'éviter de retarder les demandes ultérieures d'allocation d'adresse.

Selon le deuxième aspect, le message envoyé est un message du protocole ICMPv6, pour « Internet Control Management Protocol » plus précisément un message ICMPv6 Router Advertisement. Ce message est envoyé à destination du dispositif du réseau local, une fois l'heure de début de contrôle d'accès atteinte. Ce mode de réalisation correspond à une mise en œuvre d'une auto-configuration sans état dans un réseau de type IPv6 (« stateless » en anglais). Un tel envoi est renouvelé tant que la règle de contrôle d'accès est à appliquer.

Dans un mode de réalisation particulier, une nouvelle adresse est envoyée par le dispositif d'accès en réponse à une demande du dispositif reçue après l'heure de début, la règle de contrôle d'accès étant appliquée par le dispositif d'accès pour des paquets de données dont l'adresse source correspond à la nouvelle adresse envoyée. Un tel envoi d'une nouvelle adresse est un exemple d'action conduisant à une absence d'adresse valide.

Ceci permet d'éviter des demandes répétées d'allocation d'adresse en provenance du dispositif du réseau local, ne disposant plus d'adresse valide.

Dans un mode de réalisation particulier, le procédé de gestion comprend en outre une modification par le dispositif d'accès d'un ensemble d'adresses auquel appartient ladite adresse.

Ceci permet d'éviter que le dispositif du réseau local ne configure une adresse statique dans l'ensemble d'adresses utilisé par le dispositif d'accès. Une fois un nouvel ensemble activé, l'adresse statique appartenant à l'ancien ensemble d'adresses n'est plus valide.

L'invention concerne également un dispositif d'accès permettant un accès à un réseau de communication étendu. Ce dispositif comprend :
- un module de contrôle d'accès, agencé pour obtenir une règle de contrôle d'accès à appliquer, ladite règle visant à bloquer une communication de paquets de données à partir d'au moins une heure de début ;
- un module de contrôle d'adresse.

Selon un troisième aspect, le module de contrôle d'adresse est agencé pour envoyer à au moins un dispositif du réseau local un message DHCP relatif à une adresse dans le réseau local associée audit dispositif, une adresse permettant audit dispositif du réseau local de communiquer par l'intermédiaire du dispositif d'accès avec d'autres dispositifs, ledit message portant une information indiquant au dispositif que ladite adresse n'est plus valide à partir de ladite heure de début, le message envoyé allouant une adresse au dispositif pour une durée d'allocation, déterminée en fonction d'une durée d'accès autorisé jusqu'à l'heure de début, et pour mettre en œuvre au moins une action conduisant à une absence d'adresse valide pour ledit dispositif du réseau local, tant que l'heure de fin de la règle de contrôle d'accès n'est pas dépassée, l'action consistant à envoyer un refus d'allocation d'adresse DHCP ou une réponse DHCP avec une durée d'allocation nulle en réponse à une demande du dispositif du réseau local reçue après l'heure de début.

Les avantages énoncés pour le procédé de gestion selon le premier aspect sont transposables directement au dispositif d'accès.

Selon un quatrième aspect, le module de contrôle d'adresse est agencé pour envoyer à au moins un dispositif du réseau local un message relatif à une adresse dans le réseau local associée audit dispositif à partir de l'heure de début, une adresse permettant audit dispositif du réseau local de communiquer par l'intermédiaire du dispositif d'accès avec d'autres dispositifs, ledit message portant une information indiquant au dispositif que ladite adresse n'est plus valide à partir de ladite heure de début, ledit message étant un message de diffusion d'un préfixe ICMPv6 Router Advertisement indiquant une durée de vie nulle, ledit préfixe étant destiné à permettre au dispositif du réseau local de construire ladite adresse, et pour mettre en œuvre au moins une action conduisant à une absence d'adresse valide pour ledit dispositif du réseau local, tant que l'heure de fin de la règle de contrôle d'accès n'est pas dépassée, l'action consistant à envoyer de nouveau ledit message.

Les avantages énoncés pour le procédé de gestion selon le deuxième aspect sont transposables directement au dispositif d'accès.

Selon un cinquième aspect, l'invention concerne un programme pour un dispositif d'accès, comprenant des instructions de code de programme destinées à commander l'exécution de celles des étapes du procédé de gestion précédemment décrit mises en œuvre par le dispositif d'accès, lorsque ce programme est exécuté par ce dispositif et un support d'enregistrement lisible par un dispositif d'accès sur lequel est enregistré un programme pour un dispositif.

Les avantages énoncés pour le procédé de gestion selon le premier aspect ou selon le deuxième aspect sont transposables directement au programme pour un dispositif d'accès et au support d'enregistrement.

L'invention sera mieux comprise à l'aide de la description suivante de modes de réalisation particuliers de la technique de gestion, en référence aux dessins annexés sur lesquels :
- la figure 1 représente un réseau local dans lequel est mise en œuvre la technique de gestion selon un mode particulier de réalisation ;
- les figures 2a-2c illustrent des étapes d'un procédé de gestion selon des modes particuliers de réalisation ;
- la figure 3 représente un dispositif d'accès selon un mode particulier de réalisation.

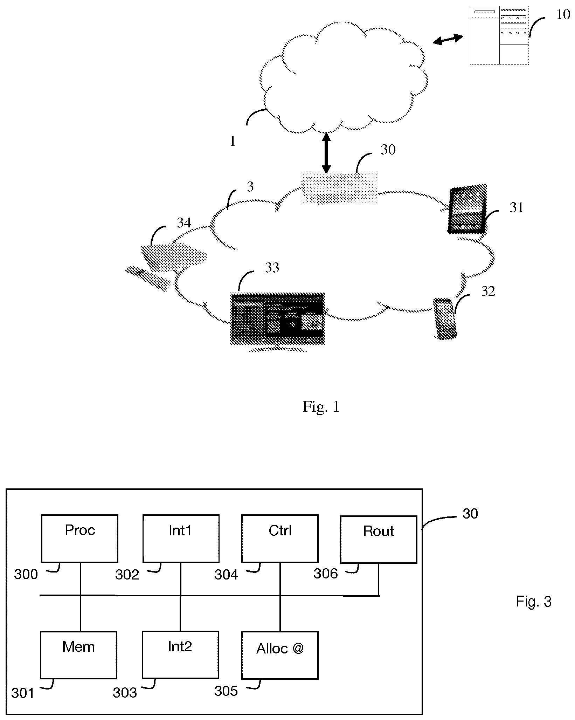

La figure 1 représente un réseau de communication privé ou local 3. Le protocole IP (pour « Internet Protocol ») est utilisé par les dispositifs dans le réseau local pour communiquer entre eux et également pour communiquer avec d'autres dispositifs par l'intermédiaire d'un réseau 1 de communication étendu WAN (pour « Wide Area Network »), tel que le réseau Internet.

Pour l'environnement représenté à la figure 1, on entend par réseau de communication local 3 un réseau de type LAN (« Local Access Network »). Ce réseau peut être en particulier un réseau domestique ou un réseau d'entreprise. Un dispositif d'accès 30 est agencé pour fournir à des dispositifs du réseau local 3 un accès vers le réseau de communication étendu (par exemple Internet) par l'intermédiaire d'un réseau d'accès, non représenté sur la figure 1. Le dispositif d'accès 30 assure l'acheminement de paquets de données entre le réseau de communication étendu 1 et le réseau local 3. Il s'agit par exemple d'une passerelle domestique ou bien d'une passerelle d'entreprise ou bien encore d'un routeur. Le réseau d'accès est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home ») ou d'un réseau mobile tel qu'un réseau 3G ou 4G. Aucune limitation n'est attachée au type du réseau d'accès.

Les dispositifs 31-34 du réseau local 3 peuvent être n'importe quels dispositifs, par exemple domestiques, disposant d'une connexion réseau filaire ou sans fil. A titre d'exemples illustratifs, différents dispositifs sont représentés sur la figure 1. Il peut s'agir par exemple, d'un ordinateur, d'une tablette tactile 31, d'un terminal mobile 32, d'une télévision 33, d'un décodeur TV 34 (« Set-Top Box »), d'une console de jeux, de dispositifs électroménagers, etc. Aucune limitation n'est attachée au nombre de ces dispositifs, ni aux types de ces dispositifs. A titre d'exemple illustratif, ces différents dispositifs s'échangent des données dans le réseau local par l'intermédiaire de canaux de communication radio, en utilisant notamment la technologie de transmission sans fil basée sur la norme de réseau radioélectrique IEEE 802.11 et ses évolutions communément regroupées sous l'appellation Wi-Fi (pour « Wireless Fidelity »).

Le dispositif d'accès 30 dispose d'une adresse IP lui permettant de communiquer avec d'autres dispositifs 10 du réseau de communication étendu 1.

Le réseau local 3 peut être un réseau de type IPv4 ou de type IPv6. Lorsque le réseau local 3 est de type IPv4, une adresse est associée à chaque dispositif 31-34 afin de lui permettre de communiquer avec d'autres dispositifs. Cette adresse est dite privée. Un paquet conforme au protocole Internet, dit paquet IP, envoyé par le dispositif comprend cette adresse IP privée en tant qu'adresse source du paquet. Un paquet IP reçu par le dispositif comprend cette adresse IP privée en tant qu'adresse de destination du paquet. Le protocole DHCPv4 (DHCP pour « Dynamic Host Configuration Protocol ») défini dans le document de l'IETF RFC 2131 est utilisé pour allouer les adresses dans le réseau local.

Lorsque le réseau local est de type IPv6, le dispositif du réseau local auto-configure une adresse IP à partir d'informations de routage reçues en provenance d'un dispositif routeur selon la procédure de découverte ICMPv6 (pour « Internet Control Management Protocol »). L'auto-configuration peut être mise en œuvre sans état (« stateless ») ou bien avec état (« stateful »). L'auto-configuration sans état, définie dans le document de l'IETF RFC 4862, est utilisée quand la gestion administrative des adresses attribuées n'est pas nécessaire au sein d'un site. L'auto-configuration avec état est utilisée lorsqu'un site demande un contrôle strict de l'attribution des adresses. Le dispositif d'accès 30 fournit dans un en-tête du message d'annonce ICMPv6 « Router Advertisement » le type d'auto-configuration à appliquer et fournit éventuellement les informations nécessaires à sa configuration. Le bit M (pour « Managed address configuration ») permet de fournir l'information relative au type d'auto-configuration :
- lorsqu'il est positionné à la valeur « 0 », il indique que le dispositif doit construire lui-même l'adresse à partir de son identifiant d'interface et des préfixes reçus (auto-configuration sans état) ;
- lorsqu'il est positionné à la valeur « 1 », il indique que le dispositif doit explicitement demander son adresse auprès d'un serveur d'adresses (auto-configuration avec état). Le mécanisme d'auto-configuration avec état s'appuie sur le modèle du client-serveur et repose sur l'utilisation du protocole DHCPv6, défini dans le document de l'IETF RFC 3315.

Par ailleurs, une adresse MAC (pour « Media Access Control ») est un identifiant physique stocké dans une carte réseau ou une interface réseau. Cette adresse MAC est unique. Elle permet d'identifier un dispositif du réseau local.

Un utilisateur peut configurer le contrôle d'accès mis en œuvre par le dispositif d'accès 30 au moyen d'une interface homme-machine. Dans un réseau domestique, pour cette configuration, l'utilisateur peut exécuter une application sur la tablette 31 ou le terminal mobile 32. Cette application permet notamment de définir des règles de contrôle parental, c'est-à-dire d'autoriser ou d'interdire un accès à un utilisateur en fonction de plages horaires définies. Une plage horaire d'interdiction comprend une heure de début de contrôle et une heure de fin de contrôle. L'interdiction peut également être globale, s'appliquant alors à tous les utilisateurs. L'utilisateur est par exemple identifié avec l'adresse MAC du dispositif qu'il utilise.

Un dispositif d'accès 30 à un réseau de communication étendu va maintenant être décrit en référence à la figure 3 dans un mode particulier de réalisation. Un tel dispositif comprend notamment :
- une zone mémoire 301, agencée pour mémoriser un programme qui comprend des instructions de code pour mettre en œuvre les étapes du procédé de gestion ;
- une mémoire de stockage, non représentée, agencée pour stocker des données utilisées lors de la mise en œuvre du procédé de gestion :
- un processeur 300 pour exécuter des instructions de code de modules logiciels ;
- un premier module 302 de communication, agencé pour communiquer avec le réseau de communication étendu ;
- un deuxième module 303 de communication, agencé pour communiquer avec les dispositifs du réseau local 3 ;
- un module 304 de contrôle d'accès, agencé pour mettre en œuvre une application de contrôle d'accès, permettant de définir des règles de contrôle d'accès et de les appliquer ;
- un module 305 de contrôle d'adresse ;
- un module 306 d'acheminement des paquets, agencé pour acheminer des paquets reçus en provenance du réseau de communication étendu ou de dispositifs du réseau local vers des dispositifs du réseau local et pour acheminer des paquets reçus en provenance du réseau local vers des dispositifs destinataires dans le réseau local ou par l'intermédiaire du réseau de communication étendu.

Il est ici souligné que le dispositif d'accès 30 comprend également d'autres modules de traitement, non représentés sur la figure 3, agencés pour mettre en œuvre les différentes fonctions d'un dispositif d'accès.

Le premier module d'interface 302 est par exemple un module xDSL, FTTH, 3G, 4G.

Le deuxième module d'interface 303 est par exemple un module d'accès à un réseau sans fil, tel que le Wi-Fi.

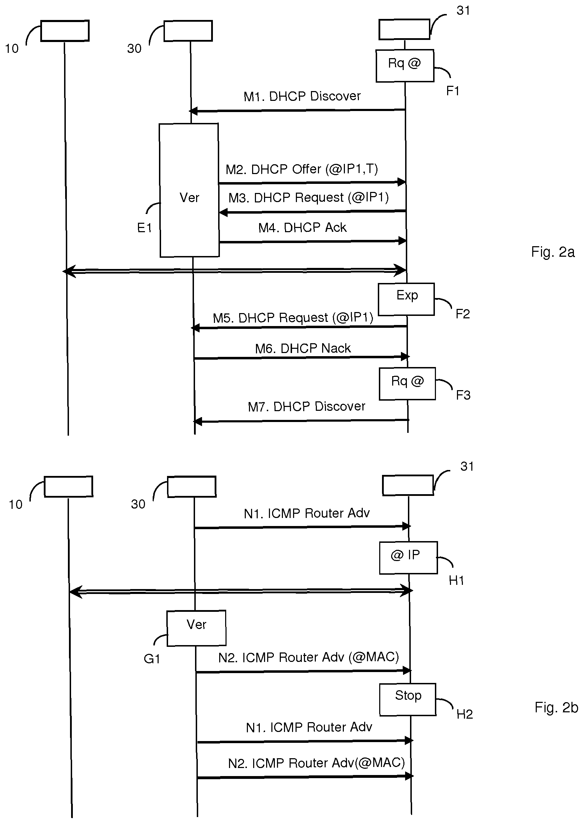

La technique de gestion d'une adresse dans un réseau local va maintenant être décrite dans des modes particuliers de réalisation en relation avec les figures 2a-2c.

Cette technique de gestion s'appuie sur un envoi par le dispositif d'accès 30 à au moins un dispositif du réseau local 31-34 d'un message relatif à une adresse dans le réseau local associée à ce dispositif. Ce message porte une information indiquant au dispositif que l'adresse qui lui est associée n'est plus valide à partir d'une heure donnée. Cette heure correspond à une heure de début d'une règle de contrôle d'accès à appliquer. Cette règle vise à bloquer une communication de paquets de données à partir d'au moins une heure de début en provenance et à destination d'au moins un dispositif du réseau local. Tant que la règle de contrôle d'accès est à appliquer, c'est-à-dire que l'heure de fin n'est pas dépassée, le dispositif d'accès 30 met en œuvre une ou plusieurs actions conduisant à une absence d'adresse valide pour le dispositif du réseau local.

Les différents modes de réalisation sont décrits par la suite dans le cadre d'une application de contrôle parental.

Dans ces différents modes de réalisation, dans une étape E0, non représentée sur les figures 2a-2c, le module de contrôle parental 304 obtient une règle de contrôle parental à appliquer à un dispositif donné du réseau local ou à un groupe de dispositifs ou encore à l'ensemble des dispositifs. Un dispositif du réseau local est notamment identifié à l'aide de son adresse MAC. La règle de contrôle parental est par exemple obtenue au moyen d'une interface homme-machine du dispositif d'accès ou bien d'un dispositif administrateur du réseau local 3.

La figure 2a décrit plus précisément les échanges entre le dispositif d'accès 30 et un dispositif du réseau local 31 dans un premier mode de réalisation particulier. Ce premier mode correspond à un réseau local de type IPv4.

Le module 305 de contrôle d'adresse est notamment agencé pour allouer des adresses du réseau local et met en œuvre le protocole DHCPv4.

On se place au niveau du dispositif 31 du réseau local et on considère qu'aucune adresse IP ne lui est associée à l'initialisation.

Dans une étape F1, le dispositif 31 du réseau local 3 initie une procédure d'allocation d'adresse. Plus précisément, le dispositif 31 envoie en mode diffusé (« broadcast » en anglais) une demande M1 de découverte d'un serveur DHCP. Cette demande M1 correspond à un message DHCP Discover diffusé sur un port destinataire de valeur 67. Elle comprend entre autres éléments d'information un identifiant du dispositif émetteur sous la forme de son adresse MAC.

Ce message M1 est reçu par le module de contrôle d'adresse 305 du dispositif d'accès 30 dans une étape E1. En effet, conformément au standard, le dispositif d'accès 30 est à l'écoute de messages envoyés sur le port 67.

Toujours dans cette étape El, le module de contrôle d'adresse 305 vérifie s'il existe une règle de contrôle parental à appliquer au dispositif identifié dans le message M1. On se place par la suite dans le cas où cette vérification est positive. En effet, dans le cas contraire, la procédure d'allocation d'adresse se poursuit conformément au standard DHCPv4 avec une durée de bail normale Tnorm, paramétrée par exemple à 24 heures.

On rappelle ici que conformément au standard DHCPv4, un dispositif recevant une durée de bail T détermine deux temporisations associées :
- T1 (« IP Address Renewal Time ») qui correspond à la durée maximale au bout de laquelle le dispositif va essayer de renouveler son bail auprès du dispositif d'accès qui lui a alloué une adresse. Généralement, T1 est configuré à 50% de la durée de bail T. Cette temporisation T1 correspond à une durée d'allocation associée à l'adresse allouée.
- T2 (« IP Address Rebinding Time ») : la durée maximale au bout de laquelle le dispositif va essayer de renouveler son bail auprès de n'importe quel serveur. Généralement, T2 est configuré à 87,5% de la durée de bail T.

Lorsque la vérification est positive, le module de contrôle d'adresse 305 obtient une donnée indiquant si l'accès est autorisé ou non. L'échange de messages lorsque l'accès n'est pas autorisé est décrit ultérieurement en relation avec une étape F2 mise en œuvre par le dispositif 31. Lorsque l'accès est autorisé, le module de contrôle d'adresse 305 obtient une durée d'accès autorisé, correspondant à la différence entre l'heure de début de la règle de contrôle à appliquer et l'heure courante (c'est-à-dire l'heure de réception de la demande). Selon les implémentations, cette durée d'accès autorisé peut être déterminée par le module de contrôle d'adresse 305 ou par le module de contrôle parental 304 en fonction de l'heure de début de la règle de contrôle parental à appliquer.

Lorsque la durée d'accès autorisé est supérieure à la durée T1norm déterminée pour la durée de bail normale Tnorm, la procédure d'allocation d'adresse se poursuit conformément au standard DHCPv4 avec la durée de bail normale Tnorm.

Dans le cas contraire, c'est-à-dire si la durée d'accès autorisé est inférieure à la durée T1norm, le module de contrôle d'adresse 305 détermine à partir de cette durée d'accès autorisé une durée de bail T (« IP Address Lease Time ») associée à une adresse @IP1 qui va être allouée au dispositif du réseau local. En appliquant le paramétrage classique d'un serveur DHCP, la durée de bail T est inférieure ou égale au double de la durée d'accès autorisé, afin de garantir que la durée T1 expire avant l'heure de début de la règle de contrôle parental.

La procédure d'allocation d'adresse se poursuit alors conformément au standard DHCPv4.

Toujours dans cette étape El, le module de contrôle d'adresse 305 envoie sur le port 68 un message M2 d'offre d'adresse au dispositif 31 identifié par son adresse MAC. Ce message M2 correspond à un message DHCP Offer et comprend notamment l'adresse IP du dispositif d'accès 30, l'adresse IP offerte et la durée de bail déterminée.

Ce message M2 est reçu par le dispositif 31 qui renvoie à destination du dispositif d'accès 30 un message M3 requérant une allocation de cette adresse @IP1. Ce message M3 correspond à un message DHCP Request et comprend l'adresse IP demandée.

Le module de contrôle d'adresse 305 envoie alors un message M4 d'accusé de réception qui alloue notamment au dispositif 31 l'adresse IP @IP1. Ce message M4 correspond à un message DHCP Ack et comprend notamment l'adresse IP et la durée du bail de cette adresse. Ce message M4 relatif à une adresse dans le réseau local associée au dispositif 31 porte ainsi une information indiquant au dispositif 31 que cette adresse n'est plus valide à partir de l'heure de début de la règle de contrôle parental à appliquer.

Le dispositif 31 initialise en fonction de la durée de bail T reçue les temporisations T1 et T2. Le dispositif 31 communique alors par exemple avec le dispositif 10 par l'intermédiaire du dispositif d'accès 30. Le dispositif 31 peut par exemple initialiser la transmission d'un flux vidéo à partir du dispositif 10.

La temporisation T1 expire lors d'une étape F2. Cette expiration se produit ainsi lorsque l'accès du dispositif 31 doit être contrôlé.

Conformément au standard DHCPv4, le dispositif 31 envoie une demande M5 de renouvellement de la durée de bail associée à l'adresse IP @IP1 qui lui a été allouée. Cette demande M5 correspond à un message DHCP Request et comprend l'adresse IP demandée.

Le module de contrôle d'adresse 305 vérifie alors, comme décrit précédemment en relation avec l'étape El, s'il existe une règle de contrôle parental à appliquer au dispositif identifié dans le message M5. Le module de contrôle d'adresse 305 obtient alors une donnée indiquant que l'accès n'est pas autorisé et envoie un message M6 de refus au dispositif 31. Ce message M6 correspond à un message DHCP Nack. Ainsi, par l'envoi de ce message M6, un refus d'allocation d'adresse est envoyé par le dispositif d'accès 30 en réponse à une demande M5 du dispositif 31 reçue après l'heure de début. Le dispositif 31 ne disposant plus d'une adresse IP valide lui permettant de communiquer, il met fin le cas échéant à une communication en cours et ne peut plus établir de nouvelles communications. La règle de contrôle parental est ainsi appliquée. Aucune modification n'est requise au niveau des dispositifs du réseau local car le procédé de gestion s'appuie sur un fonctionnement normal du protocole DHCPv4. On souligne ici que dans le protocole DHCPv4, il n'existe pas d'échange entre un serveur DHCP et un client DHCP, permettant au serveur DHCP de révoquer une adresse IP allouée. Grâce à la détermination de la durée de bail en fonction de l'heure de début de contrôle parental, il est possible de rendre invalide une adresse IP allouée à partir de l'heure de début de contrôle.

Dans une étape F3, similaire à l'étape El précédemment décrite, le dispositif 31 initie une procédure d'allocation d'adresse par envoi en mode diffusé d'un message M7 de découverte d'un serveur DHCP. Plusieurs mises en œuvre sont possibles suite à la réception de ce message M7. Elles conduisent à une absence d'adresse valide tant que l'heure de fin de la règle de contrôle d'accès à appliquer n'est pas dépassée.

Dans une première variante de réalisation, le dispositif d'accès 30 ignore ce message M7 de découverte. Le dispositif 31 renouvelle alors l'envoi de ce message à intervalles réguliers. Cette première variante présente l'avantage de limiter la charge protocolaire au niveau du réseau.

Dans une deuxième variante de réalisation, en réponse à ce message M7, le dispositif d'accès 30 offre au dispositif 31, l'adresse @IP1, ou une nouvelle adresse @IP2, dans un message DHCP Offer et lors de la réception du message DHCP Request demandant une allocation de l'adresse @IP1 envoie un refus d'allocation DHCP Nack. Le dispositif 31 renouvelle alors à intervalles réguliers la demande d'allocation d'adresse.

Il est ici souligné que dans le mode de réalisation décrit, les durées T1 et T2 sont déterminées par le dispositif 31 sur réception de la durée du bail T. Le standard DHCPv4 permet également d'envoyer ces durées T1 et T2 au dispositif 31 dans les messages M2 DHCPv4 Offer et M4 DHCPv4 Ack. Dans ce mode de réalisation particulier, la durée d'allocation T1 est par exemple fixée pour être inférieure ou égale à la durée d'accès autorisé.

Il est également souligné que l'adresse IP allouée est sélectionnée par le dispositif d'accès 30 dans un ensemble d'adresses. Dans une variante de réalisation, le dispositif d'accès 30 modifie régulièrement cet ensemble d'adresses. Ceci permet d'éviter qu'un utilisateur du dispositif configure une adresse dite statique. Cette configuration d'adresse statique permet en effet au dispositif 31 de ne pas mettre en œuvre le standard DHCPv4 pour obtenir une adresse IP dynamique. Lorsque l'ensemble d'adresses est modifié, une adresse statique configurée dans l'ancien ensemble d'adresses n'est plus valide et le dispositif 31 ne peut plus communiquer.

Le mode de réalisation décrit une découpe fonctionnelle entre les modules de contrôle d'adresse 305 et de contrôle parental 304 permettant d'illustrer des échanges entre ces modules pour la mise en œuvre du procédé de gestion. Il est ici souligné qu'aucune limitation n'est attachée à cette découpe fonctionnelle et que d'autres implémentations sont également possibles, l'objectif étant que les modules de contrôle d'adresse 305 et de contrôle parental 304 coopèrent afin que l'adresse associée au dispositif à contrôler ne soit plus valide à partir de l'heure de début de la règle de contrôle parental à appliquer. A titre d'exemple illustratif, le module de contrôle parental 304 transmet au module de contrôle d'adresse 305 un identifiant de dispositif à contrôler. Sur réception de la demande de découverte M1, le module de contrôle d'adresse 305 interroge le module de contrôle parental 304 uniquement lorsque le dispositif requérant 31 appartient à une liste de dispositifs à contrôler.

La description a été faite avec une durée de bail normale configurée à 24 heures. Aucune limitation n'est attachée à cette valeur. Il est ici souligné que la durée de bail normale peut être configurée à une valeur par exemple d'une heure. Ceci permet au dispositif d'accès 30 d'être plus réactif lors de la configuration d'une nouvelle règle de contrôle parental à appliquer ou lors de la modification d'une règle existante.

La figure 2b décrit plus précisément les échanges entre le dispositif d'accès 30 et un dispositif du réseau local 31 dans un deuxième mode de réalisation particulier. Ce deuxième mode est mis en œuvre dans un réseau local de type IPv6 avec auto-configuration sans état.

Le module 305 de contrôle d'adresse est notamment agencé pour envoyer des informations relatives au réseau local et met en œuvre le protocole ICMPv6.

On se place au niveau du dispositif 31 du réseau local et on considère qu'aucune adresse IP ne lui est associée à l'initialisation.

Le dispositif d'accès 30 envoie en mode diffusé (« Multicast » en anglais) un message N1 de découverte de routeur. Plus précisément, le message N1 correspond à un message ICMPv6 Router Advertisement comprenant notamment un bit M positionné à la valeur « 0 », comme décrit précédemment. Le message M1 diffuse un préfixe destiné à permettre à un dispositif du réseau local de construire une adresse. Le message N1 comprend également des durées de vie :
- Valid Lifetime : à l'expiration de cette temporisation, l'adresse IPv6 devient invalide ;
- Preferred Lifetime : à l'expiration de cette temporisation, l'adresse IPv6 devient dépréciée (« deprecated » en anglais).

A titre d'exemple illustratif, la durée de vie Valid Lifetime est configurée à quinze minutes et la durée de vie Preferred Lifetime est configurée à cinq minutes.

Dans une étape H1, le dispositif 31 du réseau local 3 construit sa propre adresse IPv6 @IP1 en fonction d'un préfixe reçu.

Dans une étape G1, le module de contrôle d'adresse 305 obtient une donnée indiquant que l'accès n'est pas autorisé pour le dispositif 31 à partir d'une heure de début de la règle de contrôle parental. Pour obtenir cette donnée, dans un mode de réalisation particulier, le module de contrôle d'adresse 305 interroge régulièrement le module de contrôle parental 304. Dans un autre mode de réalisation particulier, le module de contrôle parental 304 notifie le module de contrôle d'adresse 305 lorsque l'heure de début est atteinte.

Toujours dans cette étape G1, à l'heure de début, le module de contrôle d'adresse 305 envoie en mode diffusé un message N2 de découverte de routeur à destination du dispositif 31, identifié par son adresse MAC. Plus précisément, le message N2 correspond à un message ICMPv6 Router Advertisement comprenant notamment un bit M positionné à la valeur « 0 », comme décrit précédemment, et une durée de vie nulle. Le message N2 diffuse un préfixe et indique une durée de vie nulle, ce préfixe étant destiné à permettre au dispositif 31 de construire une adresse IPv6. Ce message N2 est ainsi relatif à l'adresse dans le réseau local associée au dispositif 31 et porte une information indiquant au dispositif que cette adresse n'est plus valide à partir de l'heure d'envoi du message, c'est-à-dire de l'heure de début de la règle de contrôle parental.

Ce message N2 est ignoré par d'éventuels autres dispositifs du réseau local. Seul le dispositif 31 destinataire de ce message N2 le traite. Sur réception de ce message N2, dans une étape H2, le dispositif 31 coupe les connexions en cours.

On souligne ici que conformément aux mécanismes spécifiés dans ICMPv6, le dispositif d'accès 30 envoie périodiquement en mode diffusé un message N1 de découverte de routeur. Ce message N1 est diffusé toutes les 30 à 60 secondes et est reçu également par le dispositif 31. Afin de bloquer l'accès du dispositif 31, un message N2 est de nouveau transmis en mode diffusé au dispositif 31 après chaque envoi de message N1. Ceci conduit à une absence d'adresse valide tant que l'heure de fin de la règle de contrôle d'accès à appliquer n'est pas dépassée

Il est ici souligné que l'adresse IPv6 construite par le dispositif 31 appartient à un ensemble d'adresses, identifié par le préfixe diffusé. Dans une variante de réalisation, similaire à celle décrite précédemment en relation avec le premier mode de réalisation, le dispositif d'accès 30 modifie régulièrement cet ensemble d'adresses. Ceci permet d'éviter qu'un utilisateur du dispositif configure une adresse dite statique. Lorsque l'ensemble d'adresses est modifié, une adresse statique configurée dans l'ancien ensemble d'adresses n'est plus valide et le dispositif 31 ne peut plus communiquer.

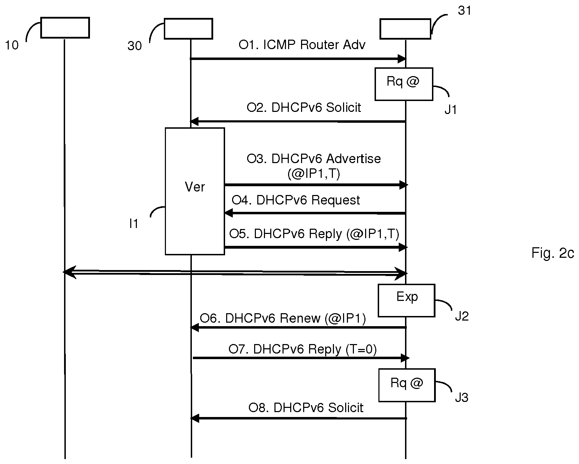

La figure 2c décrit plus précisément les échanges entre le dispositif d'accès 30 et un dispositif du réseau local 31 dans un troisième mode de réalisation particulier. Ce troisième mode est mis en œuvre dans un réseau local de type IPv6 avec auto-configuration avec état.

Le module 305 de contrôle d'adresse est notamment agencé pour allouer des adresses du réseau local et met en œuvre le protocole DHCPv6.

On se place au niveau du dispositif 31 du réseau local et on considère qu'aucune adresse IP ne lui est associée à l'initialisation.

Le dispositif d'accès 30 envoie en mode diffusé (« Multicast » en anglais) un message O1 de découverte de routeur. Plus précisément, le message O1 correspond à un message ICMPv6 Router Advertisement comprenant notamment un bit M positionné à la valeur « 1 », comme décrit précédemment.

Dans une étape J1, le dispositif 31 du réseau local 3 initie une procédure d'allocation d'adresse. Plus précisément, le dispositif 31 envoie en mode diffusé un message O2 d'interrogation de présence d'un serveur DHCPv6 sur le port 547. Ce message d'interrogation O2 correspond à un message DHCPv6 Solicit et comprend entre autres éléments d'information un identifiant du dispositif émetteur sous la forme de son adresse MAC.

Ce message O2 est reçu par le module de contrôle d'adresse 305 du dispositif d'accès 30 dans une étape I1.

Toujours dans cette étape I1, le module de contrôle d'adresse 305 vérifie s'il existe une règle de contrôle parental à appliquer au dispositif identifié dans le message O2. On se place par la suite dans le cas où cette vérification est positive. En effet, dans le cas contraire, la procédure d'allocation d'adresse se poursuit conformément au standard DHCPv6 avec une durée de vie normale LTnorm, paramétrée par exemple à 24 heures.

On rappelle ici que conformément au standard DHCPv6, quatre durées de vie (« Lifetime » en anglais) sont transmises à un dispositif :
- ValidLifeTime : à l'expiration de cette temporisation, les sessions en cours sont coupées ;
- PreferredLifeTime : à l'expiration de cette temporisation, l'adresse IPv6 devient dépréciée (« deprecated » en anglais) ; le dispositif n'utilise plus l'adresse IPv6 configurée pour de nouvelles connexions mais maintient les sessions en cours.
- T1 (« IP Address Renewal Time ») qui correspond à la durée maximale au bout de laquelle le dispositif va essayer de renouveler son bail auprès du dispositif d'accès qui lui a alloué une adresse. Cette temporisation T1 correspond à une durée d'allocation associée à l'adresse allouée.
- T2 (« IP Address Rebinding Time » : la durée maximale au bout de laquelle le dispositif va essayer de renouveler son bail auprès de n'importe quel serveur.

Lorsque la vérification est positive, le module de contrôle d'adresse 305 obtient une donnée indiquant si l'accès est autorisé ou non. L'échange de messages lorsque l'accès n'est pas autorisé est décrit ultérieurement en relation avec une étape J2 mise en œuvre par le dispositif 31. Lorsque l'accès est autorisé, le module de contrôle d'adresse 305 obtient une durée d'accès autorisé, correspondant à la différence entre l'heure de début de la règle de contrôle à appliquer et l'heure courante (c'est-à-dire l'heure de réception de la demande). Selon les implémentations, cette durée d'accès autorisé peut être déterminée par le module de contrôle d'adresse 305 ou par le module de contrôle parental 304 en fonction de l'heure de début de la règle de contrôle parental à appliquer.

Lorsque la durée d'accès autorisé est supérieure à la durée T1norm déterminée pour la durée de bail normale LTnorm, la procédure d'allocation d'adresse se poursuit conformément au standard DHCPv6 avec la durée de bail normale LTnorm.

Dans le cas contraire, c'est-à-dire si la durée d'accès autorisé est inférieure à la durée T1norm, le module de contrôle d'adresse 305 détermine à partir de cette durée d'accès autorisé une durée de vie T1 associée à une adresse @IP1 qui va être allouée au dispositif du réseau local. Généralement, T1 est configuré à 50 % de la durée PreferredLifeTime et T2 est configuré à 80 % de la durée PreferredLifeTime.

La procédure d'allocation d'adresse se poursuit alors conformément au standard DHCPv6.

Toujours dans cette étape I1, le module de contrôle d'adresse 305 envoie sur le port 546 un message O3 de présence de serveurs DHCP au dispositif 31 identifié par son adresse MAC. Ce message O3 correspond à un message DHCPv6 Advertise et comprend notamment l'adresse IP du dispositif d'accès 30, l'adresse IPv6 @IP1 et les durées de vie déterminées.

Ce message O3 est reçu par le dispositif 31 qui renvoie à destination du dispositif d'accès 30 un message O4 requérant une allocation d'adresse. Ce message O4 correspond à un message DHCPv6 Request et est un message de demande de paramètres de configuration de la part d'un client sans adresse.

Le module de contrôle d'adresse 305 envoie alors un message O5 de réponse qui alloue notamment au dispositif 31 l'adresse IPv6 @IP1. Ce message O5 correspond à un message DHCPv6 Reply et comprend notamment l'adresse IPv6 @IP1 et les durées de vie déterminées. Ce message O5 relatif à une adresse dans le réseau local associée au dispositif 31 porte ainsi une information indiquant au dispositif 31 que cette adresse n'est plus valide à partir de l'heure de début de la règle de contrôle parental à appliquer.

Le dispositif 31 initialise les temporisations T1 et T2 en fonction des durées de vie reçues. Le dispositif 31 communique alors par exemple avec le dispositif 10 par l'intermédiaire du dispositif d'accès 30. Le dispositif 31 peut par exemple initialiser la transmission d'un flux vidéo à partir du dispositif 10.

La temporisation T1 expire lors d'une étape J2. Cette expiration se produit ainsi lorsque l'accès du dispositif 31 doit être contrôlé.

Conformément au standard DHCPv6, le dispositif 31 envoie une demande O6 de renouvellement de l'adresse IPv6 @IP1 qui lui a été allouée. Cette demande O6 correspond à un message DHCP Renew et comprend l'adresse IPv6 @IP1.

Le module de contrôle d'adresse 305 vérifie alors, comme décrit précédemment en relation avec l'étape I1, s'il existe une règle de contrôle parental à appliquer au dispositif identifié dans le message O7. Le module de contrôle d'adresse 305 obtient alors une donnée indiquant que l'accès n'est pas autorisé et envoie un message O7 de refus au dispositif 31. Ce message O7 correspond à un message DHCP Reply avec des durées de vie nulles. Ainsi, par l'envoi de ce message O7, un refus d'allocation d'adresse est envoyé par le dispositif d'accès 30 en réponse à une demande O6 du dispositif 31 reçue après l'heure de début. Le dispositif 31 ne disposant plus d'une adresse IP valide lui permettant de communiquer, il met fin le cas échéant à une communication en cours et ne peut plus établir de nouvelles communications. La règle de contrôle parental est ainsi appliquée. Aucune modification n'est requise au niveau des dispositifs du réseau local car le procédé de gestion s'appuie sur un fonctionnement normal du protocole DHCPv6. On souligne ici que dans le protocole DHCPv6, il n'existe pas d'échange entre un serveur DHCP et un client DHCP, permettant au serveur DHCP de révoquer une adresse IP allouée. Grâce à la détermination des durées de vie en fonction de l'heure de début de contrôle parental, il est possible de rendre invalide une adresse IPv6 allouée à partir de l'heure de début de contrôle.

Dans une étape J3, similaire à l'étape J1 précédemment décrite, le dispositif 31 initie une procédure d'allocation d'adresse par envoi en mode diffusé un message O8 d'interrogation de présence d'un serveur DHCPv6 sur le port 547. Ce message d'interrogation O8 correspond à un message DHCPv6 Solicit et comprend entre autres éléments d'information un identifiant du dispositif émetteur sous la forme de son adresse MAC. Plusieurs mises en œuvre sont possibles suite à la réception de ce message O8. Elles conduisent à une absence d'adresse valide tant que l'heure de fin de la règle de contrôle d'accès à appliquer n'est pas dépassée.

Dans une première variante de réalisation, le dispositif d'accès 30 ignore ce message O8 d'interrogation de présence. Le dispositif 31 renouvelle alors l'envoi de ce message à intervalles réguliers. Cette première variante présente l'avantage de limiter la charge protocolaire au niveau du réseau.

Dans une deuxième variante de réalisation, en réponse à ce message O8, le dispositif d'accès 30 offre au dispositif 31 l'adresse IPv6 @IP1, ou une nouvelle adresse @IP2, dans un message DHCPv6 Reply avec des durées de vie nulles.

Il est ici souligné que l'adresse IPv6 allouée est sélectionnée par le dispositif d'accès 30 dans un ensemble d'adresses. Dans une variante de réalisation, similaire à celle décrite précédemment en relation avec le premier mode de réalisation, le dispositif d'accès 30 modifie régulièrement cet ensemble d'adresses. Ceci permet d'éviter qu'un utilisateur du dispositif configure une utilisation d'une adresse dite statique. Cette configuration d'adresse statique permet en effet au dispositif 31 de ne pas mettre en œuvre le standard DHCPv6 pour obtenir une adresse IP dynamique. Lorsque l'ensemble d'adresses est modifié, une éventuelle adresse statique n'est plus valide et le dispositif 31 ne peut plus communiquer.

Le mode de réalisation décrit une découpe fonctionnelle entre les modules de contrôle d'adresse 305 et de contrôle parental 304, permettant d'illustrer des échanges entre ces modules pour la mise en œuvre du procédé de gestion. Il est ici souligné qu'aucune limitation n'est attachée à cette découpe fonctionnelle et que d'autres implémentations sont également possibles, l'objectif étant que les modules de contrôle d'adresse 305 et de contrôle parental 304 coopèrent afin que l'adresse associée au dispositif à contrôler ne soit plus valide à partir de l'heure de début de la règle de contrôle parental à appliquer. A titre d'exemple illustratif, le module de contrôle parental 304 transmet au module de contrôle d'adresse 305 un identifiant de dispositif à contrôler. Sur réception de la demande d'interrogation de présence d'un serveur DHCPv6, le module de contrôle d'adresse 305 interroge le module de contrôle parental 304 uniquement lorsque le dispositif requérant 31 appartient à une liste de dispositifs à contrôler.

La description a été faite avec une durée de vie normale configurée à 24 heures. Aucune limitation n'est attachée à cette valeur. Il est ici souligné que la durée de vie normale peut être configurée à une valeur par exemple d'une heure. Ceci permet au dispositif d'accès 30 d'être plus réactif lors de la configuration d'une nouvelle règle de contrôle parental à appliquer ou lors de la modification d'une règle existante.

Les différents modes de réalisation sont décrits par la suite dans le cadre d'une application de contrôle parental dans un réseau domestique. Il est ici rappelé que ces modes de réalisation sont également applicables à la mise en œuvre d'une règle de contrôle d'accès dans d'autres types de réseaux locaux, tels que les réseaux d'entreprise.

Pour résumer, dans les différents modes de réalisation décrits, la technique de gestion permet de rendre invalide une adresse IP associée à un dispositif à partir de l'heure de début de la règle de contrôle d'accès à appliquer, afin de bloquer l'accès du dispositif au réseau local. tant que la règle de contrôle d'accès est à appliquer, le dispositif n'obtient pas une adresse valide lui permettant de communiquer.

La technique de gestion est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 304, 305 sont agencés pour mettre en œuvre le procédé de gestion précédemment décrit. Il s'agit de préférence de modules logiciels comprenant des instructions logicielles pour faire exécuter celles des étapes du procédé de gestion précédemment décrit, mises en œuvre par un dispositif d'accès. L'invention concerne donc aussi :
- un programme pour un dispositif d'accès, comprenant des instructions de code de programme destinées à commander l'exécution des étapes du procédé de gestion précédemment décrit, lorsque ledit programme est exécuté par ce dispositif d'accès ;
- un support d'enregistrement lisible par un dispositif d'accès sur lequel est enregistré le programme pour un dispositif.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé de gestion décrit précédemment.

Il va de soi que les modes de réalisation qui ont été décrits précédemment ont été donnés à titre purement indicatif et nullement limitatif, et que de nombreuses modifications peuvent être facilement apportées par l'homme de l'art sans pour autant sortir du cadre de l'invention.

## Revendications

1. Procédé de gestion d'une adresse dans un réseau local (3) par un dispositif d'accès (30) permettant un accès à un réseau de communication étendu, une adresse permettant à un dispositif (31-34) du réseau local de communiquer par l'intermédiaire du dispositif d'accès avec d'autres dispositifs, ledit procédé comprenant :
- une obtention par le dispositif d'accès d'une règle de contrôle d'accès à appliquer, ladite règle visant à bloquer une communication de paquets de données à partir d'au moins une heure de début et jusqu'à une heure de fin ;
- un envoi (E1, I1) par le dispositif d'accès à au moins un dispositif du réseau local d'un message DHCP (M4, O5) relatif à une adresse dans le réseau local associée audit dispositif, ledit message portant une information indiquant au dispositif que ladite adresse n'est plus valide à partir de ladite heure de début, le message envoyé allouant une adresse au dispositif pour une durée d'allocation, déterminée en fonction d'une durée d'accès autorisé jusqu'à l'heure de début ;
ledit dispositif d'accès mettant en œuvre au moins une action conduisant à une absence d'adresse valide pour ledit dispositif du réseau local, tant que l'heure de fin de la règle de contrôle d'accès n'est pas dépassée, l'action consistant à envoyer un refus d'allocation d'adresse DHCP ou une réponse DHCP avec une durée d'allocation nulle en réponse à une demande du dispositif du réseau local reçue après l'heure de début.

2. Procédé de gestion selon la revendication 1, comprenant une modification par le dispositif d'accès d'un ensemble d'adresses auquel appartient ladite adresse.

3. Procédé de gestion d'une adresse dans un réseau local (3) par un dispositif d'accès (30) permettant un accès à un réseau de communication étendu, une adresse permettant à un dispositif (31-34) du réseau local de communiquer par l'intermédiaire du dispositif d'accès avec d'autres dispositifs, ledit procédé comprenant :
- une obtention par le dispositif d'accès d'une règle de contrôle d'accès à appliquer, ladite règle visant à bloquer une communication de paquets de données à partir d'au moins une heure de début et jusqu'à une heure de fin ;
- un envoi (G1) par le dispositif d'accès à au moins un dispositif du réseau local d'un message (N2) relatif à une adresse dans le réseau local associée audit dispositif à partir de l'heure de début, ledit message portant une information indiquant au dispositif que ladite adresse n'est plus valide à partir de ladite heure de début, ledit message étant un message de diffusion d'un préfixe ICMPv6 Router Advertisement indiquant une durée de vie nulle, ledit préfixe étant destiné à permettre au dispositif du réseau local de construire ladite adresse,
ledit dispositif d'accès mettant en œuvre au moins une action conduisant à une absence d'adresse valide pour ledit dispositif du réseau local, tant que l'heure de fin de la règle de contrôle d'accès n'est pas dépassée, l'action consistant à envoyer de nouveau ledit message.

4. Dispositif d'accès (30) permettant un accès à un réseau de communication étendu, ledit dispositif comprenant :
- un module (304) de contrôle d'accès, agencé pour obtenir une règle de contrôle d'accès à appliquer, ladite règle visant à bloquer une communication de paquets de données à partir d'au moins une heure de début ;
- un module (305) de contrôle d'adresse, agencé pour envoyer à au moins un dispositif (31-34) du réseau local un message DHCP (M4, O5) relatif à une adresse dans le réseau local associée audit dispositif, une adresse permettant audit dispositif du réseau local de communiquer par l'intermédiaire du dispositif d'accès avec d'autres dispositifs, ledit message portant une information indiquant au dispositif que ladite adresse n'est plus valide à partir de ladite heure de début, le message envoyé allouant une adresse au dispositif pour une durée d'allocation, déterminée en fonction d'une durée d'accès autorisé jusqu'à l'heure de début, et pour mettre en œuvre au moins une action conduisant à une absence d'adresse valide pour ledit dispositif du réseau local, tant que l'heure de fin de la règle de contrôle d'accès n'est pas dépassée, l'action consistant à envoyer un refus d'allocation d'adresse DHCP ou une réponse DHCP avec une durée d'allocation nulle en réponse à une demande du dispositif du réseau local reçue après l'heure de début.

5. Dispositif d'accès (30) permettant un accès à un réseau de communication étendu, ledit dispositif comprenant :
- un module (304) de contrôle d'accès, agencé pour obtenir une règle de contrôle d'accès à appliquer, ladite règle visant à bloquer une communication de paquets de données à partir d'au moins une heure de début ;
- un module (305) de contrôle d'adresse, agencé pour envoyer à au moins un dispositif (31-34) du réseau local un message (N2) relatif à une adresse dans le réseau local associée audit dispositif à partir de l'heure de début, une adresse permettant audit dispositif du réseau local de communiquer par l'intermédiaire du dispositif d'accès avec d'autres dispositifs, ledit message portant une information indiquant au dispositif que ladite adresse n'est plus valide à partir de ladite heure de début, ledit message étant un message de diffusion d'un préfixe ICMPv6 Router Advertisement indiquant une durée de vie nulle, ledit préfixe étant destiné à permettre au dispositif du réseau local de construire ladite adresse, et pour mettre en œuvre au moins une action conduisant à une absence d'adresse valide pour ledit dispositif du réseau local, tant que l'heure de fin de la règle de contrôle d'accès n'est pas dépassée, l'action consistant à envoyer de nouveau ledit message.

6. Programme pour un dispositif d'accès, comprenant des instructions de code de programme destinées à commander l'exécution de celles des étapes du procédé de gestion selon l'une des revendications 1 à 3 mises en œuvre par le dispositif d'accès, lorsque ledit programme est exécuté par ledit dispositif.

7. Support d'enregistrement lisible par un dispositif d'accès sur lequel est enregistré le programme selon la revendication 6.

## Patentansprüche

1. Verfahren zur Verwaltung einer Adresse in einem lokalen Netzwerk (3) durch eine Zugangsvorrichtung (30), die einen Zugang zu einem Weitverkehrsnetz ermöglicht, wobei eine Adresse einer Vorrichtung (31-34) des lokalen Netzwerks ermöglicht, über die Zugangsvorrichtung mit anderen Vorrichtungen zu kommunizieren, wobei das Verfahren umfasst:
- eine Gewinnung, durch die Zugangsvorrichtung, einer anzuwendenden Zugangskontrollregel, wobei die Regel dazu dient, eine Kommunikation von Datenpaketen ab wenigstens einem Anfangszeitpunkt und bis zu einem Endzeitpunkt zu blockieren;
- ein Senden (E1, I1), durch die Zugangsvorrichtung an wenigstens eine Vorrichtung des lokalen Netzwerks, einer DHCP Nachricht (M4, 05) in Bezug auf eine Adresse in dem lokalen Netzwerk, die der Vorrichtung zugeordnet ist, wobei die Nachricht eine Information transportiert, die der Vorrichtung anzeigt, dass die Adresse ab dem Anfangszeitpunkt nicht mehr gültig ist, wobei die gesendete Nachricht der Vorrichtung für eine Zuweisungsdauer, die in Abhängigkeit von einer Dauer des genehmigten Zugangs bis zum Anfangszeitpunkt bestimmt wird, eine Adresse zuweist;
wobei die Zugangsvorrichtung wenigstens eine Aktion ausführt, die zu einem Fehlen einer gültigen Adresse für die Vorrichtung des lokalen Netzwerks führt, solange der Endzeitpunkt der Zugangskontrollregel nicht überschritten ist, wobei die Aktion darin besteht, in Reaktion auf eine Anforderung der Vorrichtung des lokalen Netzwerks, die nach dem Anfangszeitpunkt empfangen wurde, eine DHCP Ablehnung der Zuweisung einer Adresse oder eine DHCP Antwort mit einer Zuweisungsdauer null zu senden.

2. Verfahren zur Verwaltung nach Anspruch 1, welches eine Modifikation einer Menge von Adressen, welcher die Adresse angehört, durch die Zugangsvorrichtung umfasst.

3. Verfahren zur Verwaltung einer Adresse in einem lokalen Netzwerk (3) durch eine Zugangsvorrichtung (30), die einen Zugang zu einem Weitverkehrsnetz ermöglicht, wobei eine Adresse einer Vorrichtung (31-34) des lokalen Netzwerks ermöglicht, über die Zugangsvorrichtung mit anderen Vorrichtungen zu kommunizieren, wobei das Verfahren umfasst:
- eine Gewinnung, durch die Zugangsvorrichtung, einer anzuwendenden Zugangskontrollregel, wobei die Regel dazu dient, eine Kommunikation von Datenpaketen ab wenigstens einem Anfangszeitpunkt und bis zu einem Endzeitpunkt zu blockieren;
- ein Senden (G1), durch die Zugangsvorrichtung an wenigstens eine Vorrichtung des lokalen Netzwerks, einer Nachricht (N2) in Bezug auf eine Adresse in dem lokalen Netzwerk, die der Vorrichtung ab dem Anfangszeitpunkt zugeordnet ist, wobei die Nachricht eine Information transportiert, die der Vorrichtung anzeigt, dass die Adresse ab dem Anfangszeitpunkt nicht mehr gültig ist, wobei die Nachricht eine ICMPv6 Router Advertisement Nachricht zur Rundsendung eines Präfixes ist, das eine Lebensdauer null angibt, wobei das Präfix dazu bestimmt ist, der Vorrichtung des lokalen Netzwerks zu ermöglichen, die Adresse zu konstruieren,
wobei die Zugangsvorrichtung wenigstens eine Aktion ausführt, die zu einem Fehlen einer gültigen Adresse für die Vorrichtung des lokalen Netzwerks führt, solange der Endzeitpunkt der Zugangskontrollregel nicht überschritten ist, wobei die Aktion darin besteht, die Nachricht erneut zu senden.

4. Zugangsvorrichtung (30), die einen Zugang zu einem Weitverkehrsnetz ermöglicht, wobei die Vorrichtung umfasst:
- ein Modul (304) zur Zugangskontrolle, das dafür ausgelegt ist, eine anzuwendende Zugangskontrollregel zu gewinnen, wobei die Regel dazu dient, eine Kommunikation von Datenpaketen ab wenigstens einem Anfangszeitpunkt zu blockieren;
- ein Modul (305) zur Adresskontrolle, das dafür ausgelegt ist, an wenigstens eine Vorrichtung (31-34) des lokalen Netzwerks eine DHCP Nachricht (M4, 05) in Bezug auf eine Adresse in dem lokalen Netzwerk, die der Vorrichtung zugeordnet ist, zu senden, wobei eine Adresse der Vorrichtung des lokalen Netzwerks ermöglicht, über die Zugangsvorrichtung mit anderen Vorrichtungen zu kommunizieren, wobei die Nachricht eine Information transportiert, die der Vorrichtung anzeigt, dass die Adresse ab dem Anfangszeitpunkt nicht mehr gültig ist, wobei die gesendete Nachricht der Vorrichtung für eine Zuweisungsdauer, die in Abhängigkeit von einer Dauer des genehmigten Zugangs bis zum Anfangszeitpunkt bestimmt wird, eine Adresse zuweist, und wenigstens eine Aktion auszuführen, die zu einem Fehlen einer gültigen Adresse für die Vorrichtung des lokalen Netzwerks führt, solange der Endzeitpunkt der Zugangskontrollregel nicht überschritten ist, wobei die Aktion darin besteht, in Reaktion auf eine Anforderung der Vorrichtung des lokalen Netzwerks, die nach dem Anfangszeitpunkt empfangen wurde, eine DHCP Ablehnung der Zuweisung einer Adresse oder eine DHCP Antwort mit einer Zuweisungsdauer null zu senden.

5. Zugangsvorrichtung (30), die einen Zugang zu einem Weitverkehrsnetz ermöglicht, wobei die Vorrichtung umfasst:
- ein Modul (304) zur Zugangskontrolle, das dafür ausgelegt ist, eine anzuwendende Zugangskontrollregel zu gewinnen, wobei die Regel dazu dient, eine Kommunikation von Datenpaketen ab wenigstens einem Anfangszeitpunkt zu blockieren;
- ein Modul (305) zur Adresskontrolle, das dafür ausgelegt ist, an wenigstens eine Vorrichtung (31-34) des lokalen Netzwerks eine Nachricht (N2) in Bezug auf eine Adresse in dem lokalen Netzwerk, die der Vorrichtung ab dem Anfangszeitpunkt zugeordnet ist, zu senden, wobei eine Adresse der Vorrichtung des lokalen Netzwerks ermöglicht, über die Zugangsvorrichtung mit anderen Vorrichtungen zu kommunizieren, wobei die Nachricht eine Information transportiert, die der Vorrichtung anzeigt, dass die Adresse ab dem Anfangszeitpunkt nicht mehr gültig ist, wobei die Nachricht eine ICMPv6 Router Advertisement Nachricht zur Rundsendung eines Präfixes ist, das eine Lebensdauer null angibt, wobei das Präfix dazu bestimmt ist, der Vorrichtung des lokalen Netzwerks zu ermöglichen, die Adresse zu konstruieren, und wenigstens eine Aktion auszuführen, die zu einem Fehlen einer gültigen Adresse für die Vorrichtung des lokalen Netzwerks führt, solange der Endzeitpunkt der Zugangskontrollregel nicht überschritten ist, wobei die Aktion darin besteht, die Nachricht erneut zu senden.

6. Programm für eine Zugangsvorrichtung, welches Programmcodeanweisungen umfasst, die dazu bestimmt sind, wenn das Programm von der Vorrichtung ausgeführt wird, die Ausführung derjenigen der Schritte des Verfahrens zur Verwaltung nach einem der Ansprüche 1 bis 3 zu steuern, die von der Zugangsvorrichtung ausgeführt werden.

7. Aufzeichnungsmedium, das von einer Zugangsvorrichtung lesbar ist und auf welchem das Programm nach Anspruch 6 aufgezeichnet ist.

## Claims

1. Method for managing an address in a local area network (3) by means of an access device (30) that allows access to a wide area communication network, an address allowing a device (31-34) on the local area network to communicate with other devices via the access device, said method comprising:
- an operation, by the access device, of obtaining an access control rule to be applied, the aim of said rule being to block communication of data packets from at least one start time onwards and up to an end time;
- an operation, by the access device, of sending (E1, I1) to at least one device on the local area network a DHCP message (M4, 05) relating to an address in the local area network, which address is associated with said device, said message carrying an item of information indicating to the device that said address is no longer valid from said start time onwards, the sent message allocating an address to the device for an allocation period that is determined on the basis of a period of authorized access up to the start time;
said access device implementing at least one action that leads to an absence of a valid address for said device on the local area network until the end time of the access control rule has passed, the action consisting in sending a DHCP refusal to allocate an address, or a DHCP reply with a zero allocation period, in response to a request from the device on the local area network that is received after the start time.

2. Management method according to Claim 1, comprising an operation, by the access device, of modifying a set of addresses to which said address belongs.

3. Method for managing an address in a local area network (3) by means of an access device (30) that allows access to a wide area communication network, an address allowing a device (31-34) on the local area network to communicate with other devices via the access device, said method comprising:
- an operation, by the access device, of obtaining an access control rule to be applied, the aim of said rule being to block communication of data packets from at least one start time onwards and up to an end time;
- an operation, by the access device, of sending (G1) to at least one device on the local area network a message (N2) relating to an address in the local area network, which address is associated with said device, from the start time onwards, said message carrying an item of information indicating to the device that said address is no longer valid from said start time onwards, said message being an ICMPv6 Router Advertisement message that broadcasts a prefix and indicates a zero lifetime, said prefix being intended to allow the device on the local area network to construct said address,
said access device implementing at least one action that leads to an absence of a valid address for said device on the local area network until the end time of the access control rule has passed, the action consisting in sending said message again.

4. Access device (30) that allows access to a wide area communication network, said device comprising:
- an access control module (304), which is designed to obtain an access control rule to be applied, the aim of said rule being to block communication of data packets from at least one start time onwards;
- an address control module (305), which is designed to send to at least one device (31-34) on the local area network a DHCP message (M4, 05) relating to an address in the local area network, which address is associated with said device, an address allowing said device on the local area network to communicate with other devices via the access device, said message carrying an item of information indicating to the device that said address is no longer valid from said start time onwards, the sent message allocating an address to the device for an allocation period that is determined on the basis of a period of authorized access up to the start time, and is designed to implement at least one action that leads to an absence of a valid address for said device on the local area network until the end time of the access control rule has passed, the action consisting in sending a DHCP refusal to allocate an address, or a DHCP reply with a zero allocation period, in response to a request from the device on the local area network that is received after the start time.

5. Access device (30) that allows access to a wide area communication network, said device comprising:
- an access control module (304), which is designed to obtain an access control rule to be applied, the aim of said rule being to block communication of data packets from at least one start time onwards;
- an address control module (305), which is designed to send to at least one device (31-34) on the local area network a message (N2) relating to an address in the local area network, which address is associated with said device, from the start time onwards, an address allowing said device on the local area network to communicate with other devices via the access device, said message carrying an item of information indicating to the device that said address is no longer valid from said start time onwards, said message being an ICMPv6 Router Advertisement message that broadcasts a prefix and indicates a zero lifetime, said prefix being intended to allow the device on the local area network to construct said address, and is designed to implement at least one action that leads to an absence of a valid address for said device on the local area network until the end time of the access control rule has passed, the action consisting in sending said message again.

6. Program for an access device, comprising program code instructions that are intended to control the execution of those steps of the management method according of one of Claims 1 to 3 that are implemented by the access device, when said program is executed by said device.

7. Recording medium that can be read by an access device and on which the program according to Claim 6 is recorded.
